# EUROPEAN PATENT SPECIFICATION

(11) **EP 0 770 536 B1**
(45) Date of publication and mention of the grant of the patent: **19.09.2001**
(21) Application number: 96116997.6
(22) Date of filing: 23.10.1996
(51) Int. Cl.: B62D 1/18, F16H 51/00, G05G 5/06

(54) **A lever device for releasing or freeing a steering wheel from the steering column for adjustment**
Hebelvorrichtung zum Entkuppeln oder Lösen eines Lenkrades von der Lenksäule zur Verstellung
Dispositif à levier pour désaccoupler ou détacher un volant de direction d'une colonne de direction pour réglage

(30) Priority: 24.10.1995 IT TO950232 U
(43) Date of publication of application: 02.05.1997
(73) Proprietor: FIAT AUTO S.p.A., 10135 Torino (IT)
(72) Inventor: Tarzia, Antonio, 10065 San Germano Chisone (Torino) (IT)
(74) Representative: Serra, Francesco

(56) References cited:
- US-A- 4 300 407
- US-A- 4 682 787

## Description

The present invention relates to a lever device for releasing or freeing a steering wheel from the steering column for adjustment.

In motor vehicles provided with a device for adjusting the height of the steering wheel it is necessary, in order to effect adjustment thereof, to release or free the steering wheel from the steering column.

This is normally achieved by means of a lever usually disposed in the region of the steering column in a seat formed in the steering column cover.

A device according to the pre-characterising portion of the claim is known by document US-A-4 682 787.

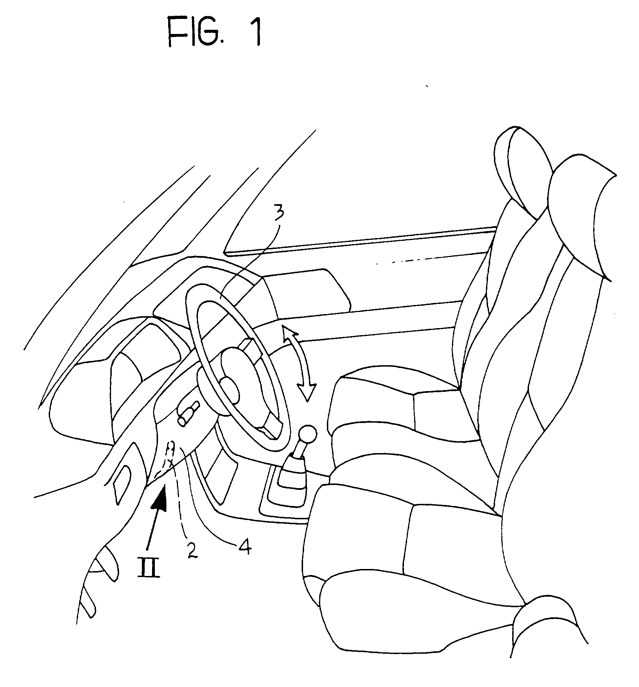

Referring to Figure 1 which represents a perspective view of the front part of the passenger compartment of a motor vehicle, the reference numeral 2 generally indicates the release lever for releasing the steering wheel 3 from the steering column not shown (positioned in the steering column cover 4), which must be released for adjusting the height of the steering wheel 3.

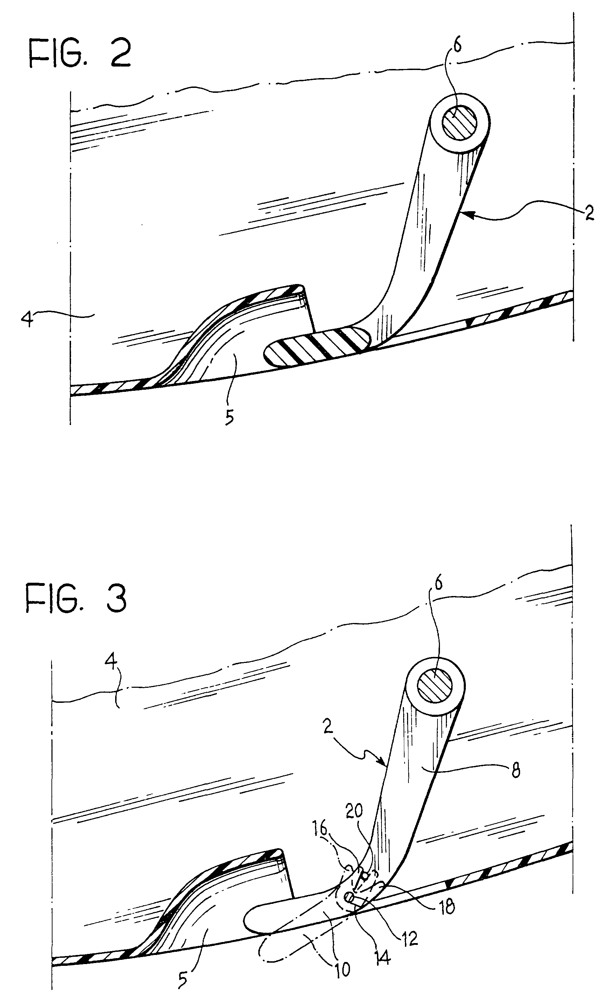

This seat can be seen better in Figure 2, where the part indicated II in Figure 1 is shown in magnified form and partially in section. In Figure 2 the lever 2 is positioned in a seat 5.

In order to adjust the height of the steering wheel the driver must introduce his fingers into the seat 5 in order to be able to rotate the lever 2 about its centre of rotation 6, overcoming the reaction of the spring (not shown) and therefore releasing the lever 2 itself in order to be able to adjust the height of the steering wheel.

In many cases the seat 5 is of rather small dimensions so that gripping the lever 2 is difficult.

The object of the present invention is that of providing a lever for releasing the steering wheel from the steering column, which allows an easy and comfortable grip and which overcomes the above-mentioned disadvantages.

The present invention achieves the above-mentioned objects by a lever device for releasing or freeing a steering wheel from the steering column of a motor vehicle, particularly a motor car, having the characteristics set out specifically in the following claim.

The invention will now be described purely by way of non-limitative example with reference to the attached drawings, in which:
Figure 1 (already described) is a schematic perspective view of the front part of the passenger compartment of a motor car;
Figure 2 (already described) is a magnified partial section of the part indicated II in Figure 1; and
Figure 3 is a section corresponding to that of Figure 2 in which the steering wheel release device according to the present invention is visible.

Referring to Figure 3 where parts which are the same as or correspond to those of Figure 2 are indicated with the same reference numerals, the release lever 2 comprises an upper arm 8 and a lower arm 10 articulated together by means of a pivot pin 12.

The lower arm 10 is shown in solid outline in its rest position and in chain line in its working position.

A biasing spring 14 retains the arm 10 in its rest position.

In its upper part, close to the pivot pin 12, the lower arm 10 is fork shaped, comprising a first branch or prong 16 and a second branch or prong 18.

The lower part of the upper arm 8 includes an end stop pin 20.

The end stop 20 is in contact with the branch 16 of the arm 10 when this is in the rest position, whilst it is in contact with the branch 18 when the arm 10 is in its use position (shown in broken outline in Figure 3).

In use, if the driver wishes to vary the height of the steering wheel, he introduces his hand or even only the fingers into the space 5 and, overcoming the resistance of the spring 14,- pulls the lower arm 10 of the lever 2 downwardly until the branch 18 of the fork abuts the end stop 20; in this situation the lever 2 is effectively one piece, is easily grippable and can be made to turn about its centre of rotation 6 for adjustment of the steering wheel.

Having effected adjustment of the steering wheel, in order to return it to the locked position, the user acts in the opposite sense with respect to what has just been explained, pushing the arm 10 upwards, this movement being encouraged by the spring 14 which tends to urge the branch 16 of the fork of the arm 10 towards the end stop 20.

From the above the advantages of the device according to the invention appear evident; even with very limited space available access to the steering wheel release lever for releasing it from the steering column is easy, without however any penalty in use.

## Claims

1. A lever device (2) for releasing or freeing a steering wheel (3) from the steering column of a motor vehicle, particularly a motor car, said lever device comprising a first arm (8) and a second arm (10) articulated together,
**characterised in that**
- said first arm (8) includes an end stop (20) for an upper part of said second arm (10),
- said upper part of the second arm (10) is fork shaped with branches (16, 18) able to engage said end stop (20),
- said second arm (10) includes a biasing spring (14) tending to urge the branch (16) of the fork towards said end stop (20).

## Patentansprüche

1. Hebelvorrichtung (2) zum Entkuppeln oder Freistellen eines Lenkrads (3) von der Lenksäule eines Kraftfahrzeugs, insbesondere eines Kraftwagens, wobei die Hebelvorrichtung einen ersten Arm (8) und einen zweiten Arm (10), die gelenkig miteinander verbunden sind, umfasst,
**dadurch gekennzeichnet, dass**
- der erste Arm (8) einen Endanschlag (20) für einen oberen Teil des zweiten Arms (10) einschließt,
- der obere Teil des zweiten Arms (10) gabelförmig ist, mit Abzweigungen (16, 18), die den Endanschlag (20) in Eingriff bringen können,
- der zweite Arm (10) eine Schrägfeder (14) einschließt, die dazu neigt, die Abzweigung (16) der Gabel hin zum Endanschlag (20) zu drängen.

## Revendications

1. Dispositif à levier (2) destiné à libérer ou dégager un volant (3) de la colonne de direction d'un véhicule à moteur, notamment d'une automobile, le dispositif à levier comportant un premier bras (8) et un second bras (10) articulés l'un sur l'autre,
**caractérisé en ce que**
le premier bras (8) comporte un organe d'arrêt d'extrémité (20) destiné à une partie supérieure du second bras (10),
la partie supérieure du second bras (10) a une forme de fourche dont les branches (16, 18) peuvent coopérer avec l'organe d'arrêt d'extrémité (20), et
le second bras (10) comprend un ressort de rappel (14) qui a tendance à pousser la branche (16) de la fourche vers l'organe d'arrêt d'extrémité (20).
